# EUROPEAN PATENT SPECIFICATION

(11) **EP 1 111 375 B1**
(45) Date of publication and mention of the grant of the patent: **17.12.2014**
(21) Application number: 00127975.1
(22) Date of filing: 20.12.2000
(51) Int. Cl.: G01N 21/95

(54) **Inspection device for packages**
Prüfeinrichtung für Verpackungen
Dispositif de contrôle pour des emballages

(30) Priority: 22.12.1999 EP 99125674
(43) Date of publication of application: 27.06.2001
(73) Proprietor: Novartis AG, 4056 Basel (CH)
(72) Inventor: Krahn, Andreas, 10437 Berlin (DE); Saedler, Jürgen, 12437 Berlin (DE); Schlegel, Jan, 10117 Berlin (DE); Lang-Schöll, Anette Therese, 81379 München (DE); Jux, Egbert, D-63814 Mainaschaft (DE)
(74) Representative: Bohest AG

(56) References cited:
- EP-A- 0 413 817
- EP-A- 0 686 563
- EP-A1- 0 370 527
- EP-A1- 1 003 027
- WO-A1-98/58241
- US-A- 4 399 367
- US-A- 5 363 968
- US-A- 5 943 436

## Description

The invention relates to a method and a device for detecting defects in packages, especially in blister packages.

The packages in question are frequently so-called blister packages. A blister package consists of a plastic container, for example of polypropylene (PP) and a cover film, the top of the container being sealed with the film after the moulding has been placed in the plastic container. The films employed are preferably multi-layered films. They consist of a metallic base foil, for example aluminium, a plastic film material mounted thereon, which is printed on the upper side and/or on the side facing the metal foil, and a plastic film material on the lower side, which can be sealed to a plastic container. Laminated foils of this kind are often inscribed on top with various data, such as the use-by date, a batch number and other details describing the contents of the package.

Ophthalmic mouldings are usually put away in a package for storage and for transport. In particular, contact lenses that are produced in large unit numbers, for example disposable contact lenses, are sealed into blister packages. Such contact lenses are preferably manufactured by the so-called mould or full-mould process. In this process, the lenses are manufactured into their final shape between two moulds, so that there is no need to subsequently finish the surfaces of the lenses, nor to finish the edges. The contact lenses produced in this manner are moulded parts having little mechanical stability and a water content of more than 60 % by weight. After its manufacture, the lens is metrologically checked and then placed in a blister container, to which isotonic sodium chloride solution (saline) is also added. Then, the cover film is placed on several blister containers, and is sealed to the blister containers by a sealing unit, thus producing a blister strip. The package subsequently undergoes heat sterilisation at 121°C in an autoclave. In order that a single blister package can be separated from the strip again, enabling the customer to open it, the cover film is additionally provided with perforated lines.

Optical components produced in series, e.g. contact lenses, have to be checked for defects such as scratches, shrinkage or edges that have broken away. The components recognised as defective are then rejected. However, at the present time, there is no provision for verifying whether the sealed package has defects. These defects include a defective sealing seam, which for example only makes an incomplete seal or is too narrow, or else cracks in the PP container, so that the isotonic saline can leak out and dry out the contact lens. The customer then discovers an unusable contact lens and is of course annoyed. Or, the contact lens appears to be still usable, but is no longer sterile, since bacteria was able to penetrate into the package through the broken barriers. In addition, the position of the perforations can be shifted when sealing, so that it is only possible to separate a blister package from the blister strip with great difficulty. However, if these defects are recognised by chance or by spot checks, then either the whole batch has to be rejected or all the contact lens packages have to undergo 100% manual checking. Both procedures involve substantial costs. Similar problems also arise with other packages that are filled with sensitive products.

US-A-5363968 discloses an inspection station, wherein a transport assembly moves the blisters through the station to a discharge conveyor, wherein a detector or sensor is mounted in the inspection station directed at the path of travel of the blisters, and wherein the detector actuates a high speed camera for capturing a picture of the blister, the picture being monitored to determine the desired characteristics using computer technology.

EP-A-0413817 discloses an apparatus for inspecting the properties of a curved surface using white light obtained by mixing light rays from a plurality of preferably ring-shaped light-emitting elements and detecting the properties of a curved surface in a short time, wherein the reflected light images from the curved-surface body are detected simultaneously and distinguished by hue to determine curved-surface body properties using the hue patterns obtained.

The invention is therefore based on the problem of providing an automatic inspection device with which it is possible to determine, with little effort and without contact, whether packages, particularly sealed blister packages consisting of a blister container and a cover film, are free of defects, especially in respect of the blister containers, the sealing seam and the perforation. Furthermore, the packages recognised as defective should be automatically sorted out. In addition, an inspection device of this kind should enable a high number of units to pass through, since as a rule the goods to be packaged arrive in rapid succession.

The invention solves this problem with the features indicated in claim 1. As far as further essential refinements are concerned, reference is made to the dependent claims.

The invention solves the problem with the use of at least two light sources, which are arranged at a certain distance from one another and each emit a light bundle at a predetermined wavelength range, whereby the emission maxima of the two light sources are offset in relation to one another. The light sources are arranged such that the packages are vertically illuminated. The light reflected by the packages is recorded by a CCD camera and the digital images are stored in a computer, so that they are available in a computer-aided image-processing and documentation system. The images of different packages can be compared with one another, thus making a statistical analysis of defects possible. Moreover, a computer-controlled handling system is provided, which serves to prepare, present and further handle the blister packages. In particular, the damaged blister packages are automatically sorted out.

Further details and advantages of the invention may be seen from the description that follows and the drawing. In the drawing,
- Fig.1: shows a schematic illustration of an embodiment of an inspection device according to the invention;
- Fig.2: shows an image of a damaged blister package being examined by an inspection device according to the invention;
- Fig.3: shows an image of a blister package being examined, the sealing seam of which is open;
- Fig.4: shows an image of a blister package being examined, the sealing seam of which is open and which contains no saline;
- Fig.5: shows an image of a blister package being examined, the sealing seam of which is too narrow;
- Fig. 6: shows an image of a blister package being examined in vertical light, in which the perforation line has shifted;
- Fig. 7: shows a drawed reproduction of a blister package being examined in transmitted light, in which the perforation line is in the correct position;
- Fig. 8: shows a drawed reproduction of of a blister package being examined in transmitted light, in which the perforation line has shifted.

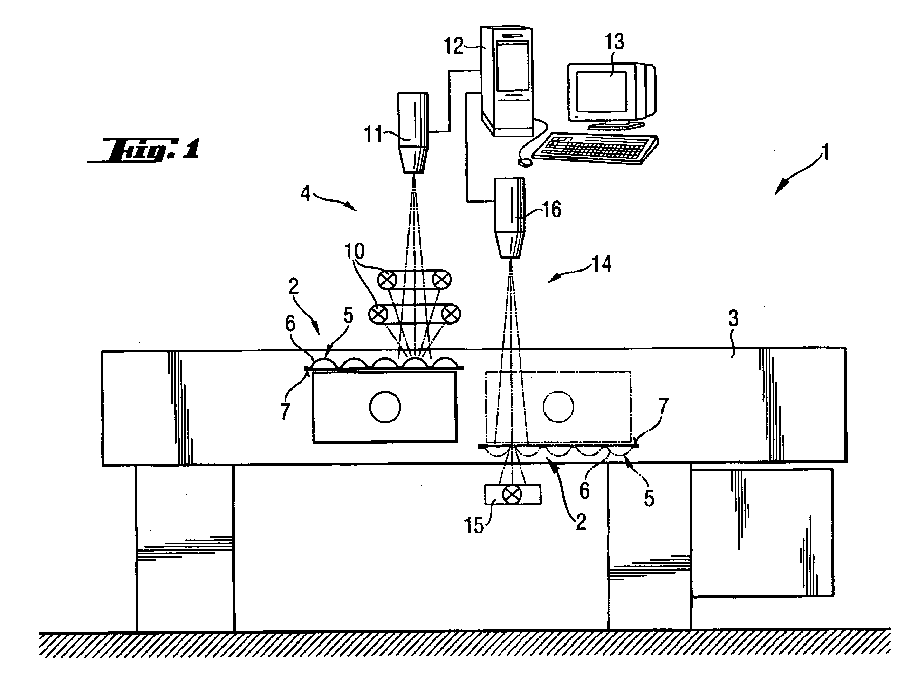

Fig. 1 illustrates an inspection device 1 for checking packages 2. The checking device advantageously consists of two units, whereby one unit includes the handling system 3 provided for transporting and preparing the packages 2 to be examined, and the other unit forms the image-recording and image-processing system 4 which carries out the actual recording and analysis of images. The image-processing system 4 is preferably of stationary design, and the handling system 3 transports the packages to be inspected under the image-recording system 4.

If the packages 2 are blister packages, they are preferably arranged in a blister strip 5. The blister strips 5 advantageously have five blister containers 6 arranged in series, which preferably consist of polypropylene. The blister containers 6 are connected to one another by a film strip 7, the shape of which corresponds to the contour of the upper side of the blister containers 6. Since the film strip 7 is sealed to the individual blister containers 6 along a sealing seam 8 after the object, preferably a contact lens, has been packaged, the blister containers 6 are thus joined together by the film strip 7. The film strip 7 is suitably provided with four perforation lines 9, which are preferably punched into the film strip 7 before it is applied to the blister containers 6. After the film strip 7 has been sealed to the blister containers 6, the perforation lines 9 should be arranged in the peripheral area between two touching blister containers 6, as a single blister container 6 can then be separated from the blister strip 5 by simply breaking it off.

The image processing system 4 consists of two circular lights 10, which are advantageously arranged in an axis vertical to the suitably horizontal blister strips 5. The two circular lights 10 emit light preferably in a certain wavelength range in the visible spectrum, and the emission maxima of the two circular lights 10 are offset in relation to one other. It is appropriate for the emission maximum of one circular light to lie in the red range, while the emission maximum of the other circular light lies in the blue range, but they may be in any order. By arranging the two circular lights 10 having the same reflecting characteristic, each however emitting a different colour, at two different heights, it is possible to illuminate the packages 2 to be examined evenly. By illuminating with colours, it is possible to have colour classification in addition to the traditional methods, so that defective structures can be recognised more clearly and more quickly than with conventional grey value processing. To test the saline, the sealing seam 8 and the blister containers 6 for impurities, flaws and breaks, the blister strips 5 are firstly rotated by the handling system 3 using grippers or a suction assembly, so that the film 7 lies on the side facing away from the illuminating device 10. Since the blister containers 6 are of transparent construction, and contact lenses contained therein are likewise transparent, the light is reflected from the opaque blister film 7. A 3Chip-CCD colour camera 11, preferably with 730x540 pixels, is advantageously used to receive the light reflected from the blister film 7. The CCD camera is linked to a computer 12, so that the coloured image of the blister packages 2 is visible on a screen 13 and can be evaluated by an automatic image processing system. The images of different blister packages 2 may also be stored, so that statistical information about the appearance of various types of defects can be given. When the images are received, there is advantageously a provision for each individual blister container 6 of a blister strip 5 to be observed separately, so that five individual images are taken per blister strip 5. Testing of a blister strip 5 takes place in a maximum of 2.5 seconds, so that a rapid throughput is made possible. Using the image processing system, preferably the following defects are observed: flaws, breaks, missing blister container, particles in the sealing seam, width of the sealing seam, defective seal and break in the seal, missing perforation, position of the perforation, strength of the perforation, presence of saline.

Moreover, to observe the perforation lines 9, an additional image-receiving device 14 is provided. In this, the blister strips 5 are observed in transmitted light. To this end, an illumination device 15 is provided, which preferably emits white light. For technical reasons relating to the apparatus, this illumination device 15 is arranged below the preferably horizontal blister strips 5. To observe the perforation lines 9 better, the blister strips 5 are rotated by 180° using grippers or a suction assembly, so that the film strip 7 again lies on the side facing away from the illumination device 15. Since the perforation lines 9 are observed in transmitted light, a second camera 16 is provided opposite the illumination device 15. Because of the clear light-dark image, it is possible to assess the perforation lines 9 exactly and with certainty. The distance between the camera 11 for the blister inspection and the camera 16 for the perforation inspection is advantageously ca. 135 mm.

The accuracy of positioning the blister strips 5 in front of the two cameras 11, 16 should be preferably at least +/- 0.5 mm in all directions. Deviations from the horizontal position impair the reproduction of the contour of the seal. If the deviation from the horizontal is greater than 3°, the reliability of the inspection is impaired, and if the deviation is greater than 5°, reliable inspection can no longer be guaranteed. The blister strips 5 should each remain still for the time it takes to take a picture, which is ca. 40 msec. The residual oscillation of the grippers and suction assembly of the handling system 3 should not exceed an amplitude of preferably 20 micrometers while the picture is being taken. Furthermore, there are suitable provisions for the system to be stopped automatically at any time, in order to be able to inspect an individual unit more closely. In addition, a type of operation should enable the inspection device to stop automatically at any observed defect.

The software structure is advantageously of a modular concept. This is to enable or simplify the implementation of improved algorithms or of new defect features which are unknown at the present time. Furthermore, the parameters for the preprocessing of images and for classification may be conveniently amended.

The inspection data preferably contain the following details:
- test date and time
- lot number (batch)
- depot number
- test position of the individual blister container or perforation
- test result: good or defective
- number, location and size of the recognised defective objects

A statistical evaluation is conveniently undertaken for each depot, the following being evaluated: the number of tested packages, the number and percentage of each type of defect, the number and percentage of good lenses, the number of defective blister strips, and the number of defect-free blister strips.

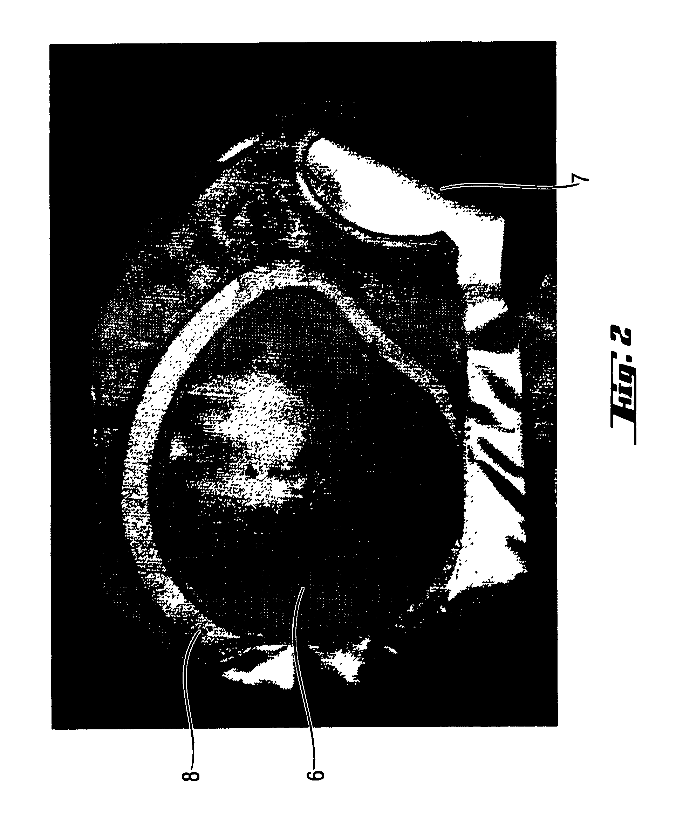

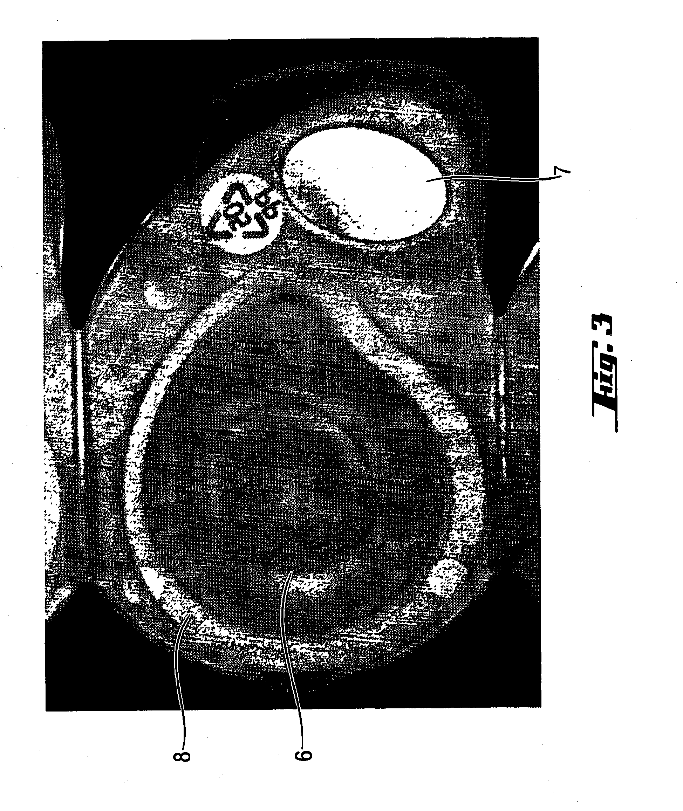

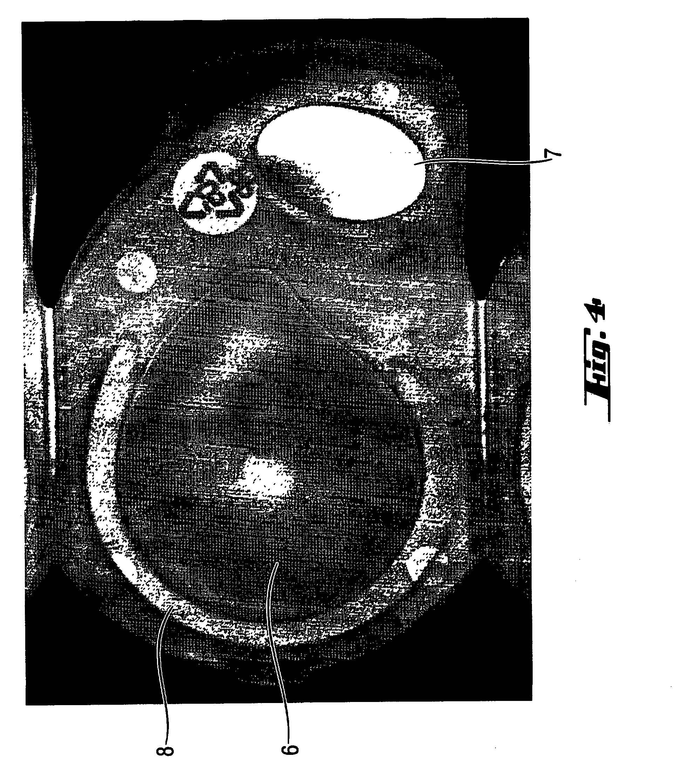

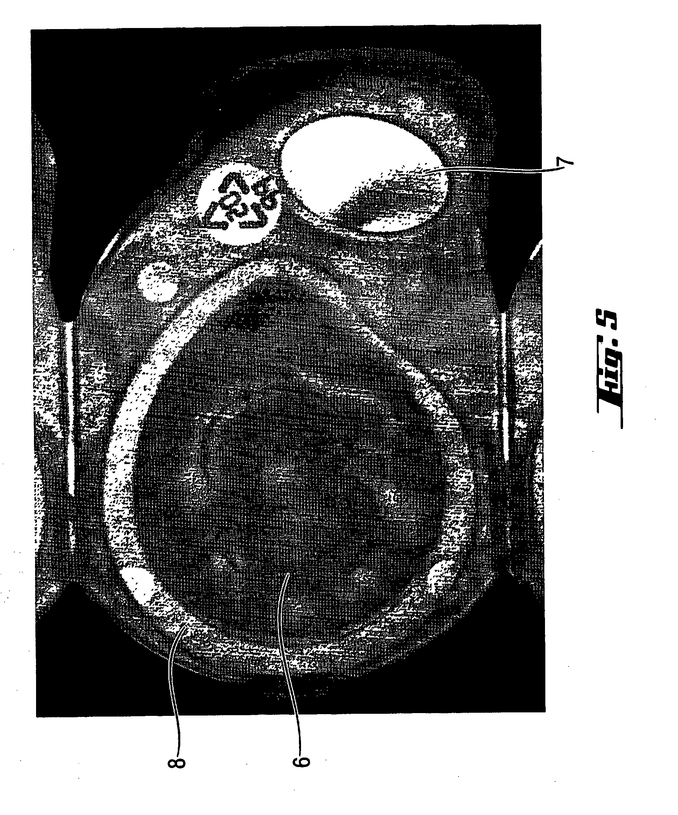

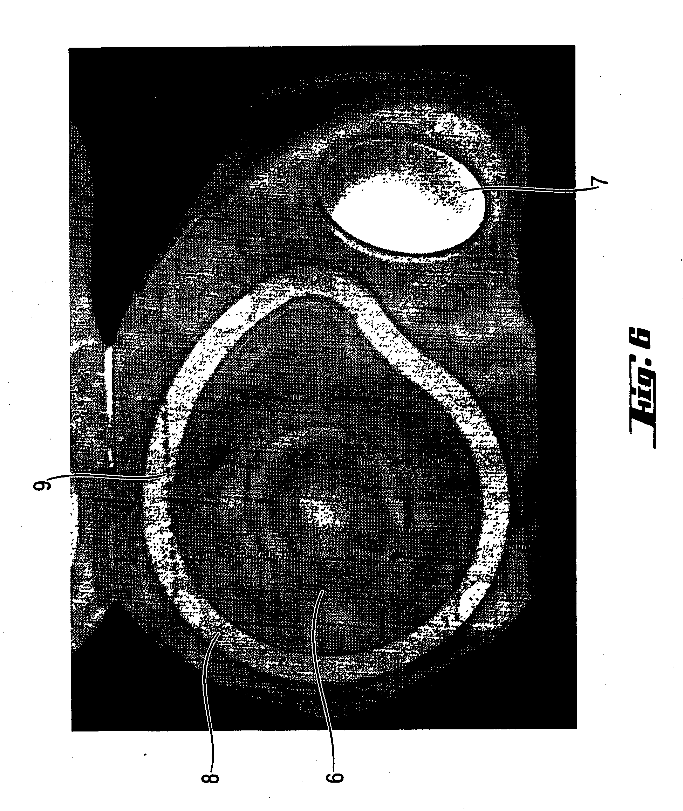

Figs. 2 to 6 illustrate images in black and white of spoiled blister packages. As explained, the containers were illuminated with two different colours from two different directions and then recorded by a 3CCD-Chip camera with 730x540 pixels. In particular, in the coloured images not reproduced here, contours especially of the sealing seam, defects within and in the transition of the sealing seam, displacement of the film and cracks in the container are clearly visible. All the images were made in vertical light with a view onto the container.

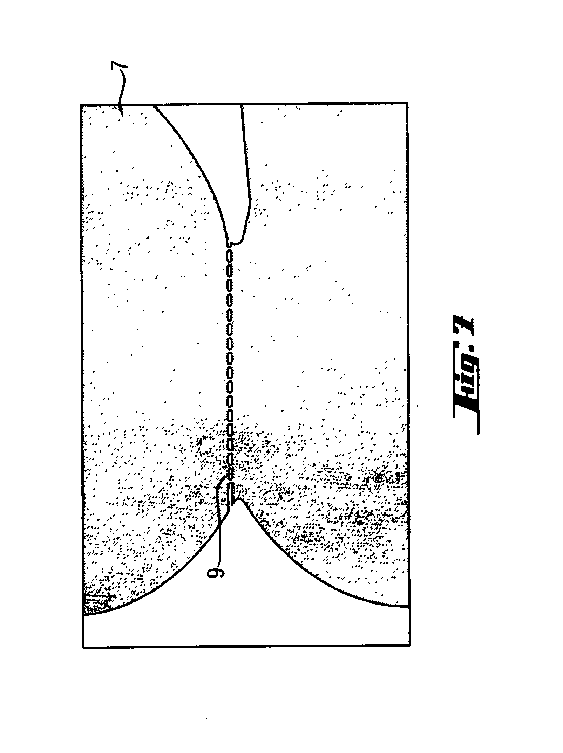

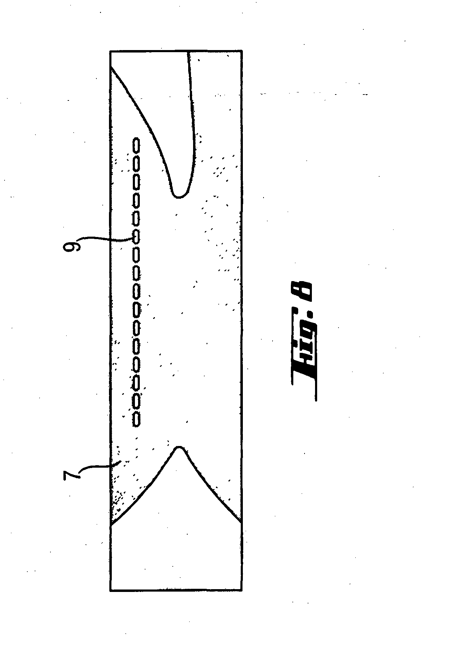

Although the perforation lines 9 form an image in vertical light, they are not so easy to evaluate. In contrast, there are no problems when operating in transmitted light. Figs. 7 and 8 show images of perforation lines which were illuminated in transmitted light. The perforation lines 9 can be clearly recognised, and likewise the deviation of their position from the centre line between two blister containers 6.

Over all, the invention provides the possibility of inspecting packages, especially blister packages, without touching them, to check for defects such as flaws, breaks, missing blister container, particles in the sealing seam, width of the sealing seam, defective seal and break in the seal, missing perforation, position of the perforation, strength of the perforation, presence of saline. In addition, the defective packages can be sorted easily according to the results of the inspection.

## Claims

1. Inspection device (1) for inspecting the blister packages (2) of a strip (5) comprising a plurality of blister packages (2) and a cover film (7), each blister package (2) comprising a plastic container and the cover film (7) comprising a metallic layer, with the cover film (7) extending over the blister packages (2) and being sealed to the containers of the blister strip (5), and with the cover film (7) being provided with perforation lines (9) which are arranged between adjacent blister packages (2) of the strip (5),
the inspection device comprising a handling system (3) for preparing, presenting and further handling the packages (2), in which handling system (3) the blister strips (5) are arranged horizontally,
the inspection device further comprising an image receiving and processing system (4,11,12), which includes an illumination device comprising two circular lights (10) being arranged above the horizontally arranged blister strips (5) as well as above one another about a vertical axis relative to the horizontally arranged blister strips (5), each of the said circular lights (10) emitting light in a predetermined wavelength range with their emission maxima being offset in relation to one another, and which includes an image-recognising sensor (11) and an image-processing means (12), with the image-recognising sensor (11) being arranged above the horizontally arranged blister strips (5) so as to receive light emitted by the circular lights (10) and reflected by the packages (2) to be inspected,
**characterised in that**
the inspection device comprises a third light source (15) which is arranged below the horizontally arranged blister strips (5), and an additional image-receiving device (14,16) which is arranged above the horizontally arranged blister strips (5) so as to also allow to receive light emitted from the third light source (15) and transmitted through the perforation lines (9) arranged between adjacent packages (2) of the strip (5) .

2. Inspection device according to claim 1, in which one of the two circular lights (10) has its emission maximum in the red wavelength range and the other circular light in the blue wavelength range of the visible spectrum.

3. Inspection device according to any one of the preceding claims, in which the image-recognising sensor (11) is a CCD camera.

4. Inspection device according to any one of the preceding claims, in which the third light source (15) is a circular light.

5. Inspection device according to any one of the preceding claims, in which both the image-recognising sensor (11) and the image-receiving device (14,16) each comprises a camera, and wherein the image processing system (12) comprises a computer, with the cameras being connected to the computer so as to enable storage of the images of the packages (2) in the computer to allow automatic, software-supported image-analysis to be carried out.

## Patentansprüche

1. Inspektionsvorrichtung (1) zum Inspizieren der Blisterpackungen (2) eines eine Vielzahl von Blisterpackungen (2) und einen Deckfilm (7) umfassenden Streifens (5), wobei jede Blisterpackung (2) einen Plastikbehälter und den eine Metallschicht umfassenden Deckfilm (7) umfasst, wobei sich der Deckfilm (7) über die Blisterpackungen (2) erstreckt und auf die Behälter des Blisterstreifens (5) gesiegelt ist, und wobei der Deckfilm (7) mit Perforationslinien (9) versehen ist, die zwischen aneinander angrenzenden Blisterpackungen (2) des Streifens (5) angeordnet sind,
wobei die Inspektionsvorrichtung ein Handhabungssystem (3) zum Vorbereiten, Präsentieren und weiteren Handhaben der Packungen (2) umfasst, in welchem Handhabungssystem (3) die Blisterstreifen (5) horizontal angeordnet sind,
wobei die Inspektionsvorrichtung weiterhin ein Bildempfangs- und Verarbeitungssystem (4,11,12) umfasst,
welches eine Beleuchtungseinrichtung aufweist, die zwei ringförmige Leuchten (10) umfasst, die oberhalb der horizontal angeordneten Blisterstreifen (5) angeordnet sind sowie übereinander um eine relativ zu den horizontal angeordneten Blisterstreifen (5) senkrechte Achse herum, wobei jede der besagten ringförmigen Leuchten (10) Licht in einem vorgegebenen Wellenlängenbereich emittiert, wobei deren Emissionsmaxima zueinander verschoben sind,
und welches einen Bilderkennungssensor (11) aufweist sowie ein Bildverarbeitungsmittel (12), wobei der Bilderkennungssensor (11) oberhalb der horizontal angeordneten Blisterstreifen (5) angeordnet ist, um das von den ringförmigem Leuchten (10) emittierte und von den zu inspizierenden Packungen (2) reflektierte Licht zu empfangen,
**dadurch gekennzeichnet, dass**
die Inspektionsvorrichtung eine dritte Lichtquelle (15) umfasst, die unterhalb der horizontal angeordneten Blisterstreifen (5) angeordnet ist und eine zusätzliche Bildempfangseinrichtung (14,16), die oberhalb der horizontal angeordneten Blisterstreifen (5) angeordnet ist, um auch zu ermöglichen von der dritten Lichtquelle (15) emittiertes und durch die Perforationslinien (9), die zwischen angrenzenden Packungen (2) des Streifens (5) angeordnet sind, durchgelassenes Licht zu empfangen.

2. Inspektionsvorrichtung nach Anspruch 1, bei der eine der zwei ringförmigen Leuchten (10) ihr Emissionsmaximum im roten Wellenlängenbereich hat und die andere ringförmige Leuchte im blauen Wellenlängenbereich des sichtbaren Spektrums.

3. Inspektionsvorrichtung nach einem der vorangehenden Ansprüche, bei welcher der Bilderkennungssensor (11) eine CCD Kamera ist.

4. Inspektionsvorrichtung nach einem der vorangehenden Ansprüche, wobei die dritte Lichtquelle (15) eine ringförmige Leuchte ist.

5. Inspektionsvorrichtung nach einem der vorangehenden Ansprüche, wobei der Bilderkennungssensor (11) und die Bildempfangsvorrichtung (14,16) beide jeweils eine Kamera umfassen, und wobei das Bildverarbeitungssystem (12) einen Computer umfasst, wobei die Kameras mit dem Computer verbunden sind, um das Speichern der Bilder von den Packungen (2) im Computer zu ermöglichen, um das Durchführen einer automatischen, softwareunterstützten Bildanalyse zuzulassen.

## Revendications

1. Dispositif d'inspection (1) pour inspecter les emballages à coque (2) d'une bande (5) comprenant une pluralité d'emballages à coque (2) et un film de revêtement (7), chaque emballage à coque (2) comprenant un récipient en matière plastique et le film de revêtement (7) qui comprend une couche métallique, le film de revêtement (7) s'étendant sur les emballages à coque (2) étant scellé de façon étanche sur les récipients de la bande de coques (5), et le film de revêtement (7) étant muni de lignes de perforation (9) qui sont disposées entre des emballages à coque adjacents (2) de la bande (5),
le dispositif d'inspection comprenant un système de manipulation (3) pour préparer, présenter et manipuler encore les emballages (2), dans lequel système de manipulation (3) les bandes à coques (5) sont disposées horizontalement,
le dispositif d'inspection comprenant de plus un système de réception et de traitement d'image (4, 11, 12),
qui comprend un dispositif d'éclairage comprenant deux lumières circulaires (10), qui sont disposées au-dessus des bandes à coques disposées horizontalement (5), et l'une au-dessus de l'autre autour d'un axe vertical par rapport aux bandes à coques disposées horizontalement (5), chacune desdites lumières circulaires (10) émettant une lumière dans une plage de longueur d'onde prédéterminée, leurs maxima d'émission étant décalés l'un par rapport à l'autre,
et qui comprend un capteur de reconnaissance d'image (11) et des moyens de traitement d'image (12), le capteur de reconnaissance d'image (11) étant disposé au-dessus des bandes à coques disposées horizontalement (5) de façon à recevoir une lumière émise par les lumières circulaires (10) et réfléchie par les emballages (2) devant être inspectés,
**caractérisé en ce que**
le dispositif d'inspection comprend une troisième source de lumière (15), qui est disposée en dessous des bandes à coques disposées horizontalement (5), et un dispositif de réception d'image additionnel (14, 16), qui est disposé au-dessus des bandes à coques disposées horizontalement (5) de façon à permettre aussi de recevoir une lumière émise à partir de la troisième source de lumière (15), et transmise à travers les lignes de perforation (9) disposées entre des emballages adjacents (2) de la bande (5).

2. Dispositif d'inspection selon la revendication 1, dans lequel l'une des deux lumières circulaires (10) a son maximum d'émission dans la plage de longueur d'onde rouge, et l'autre lumière circulaire dans la plage de longueur d'onde bleue du spectre visible.

3. Dispositif d'inspection selon l'une quelconque des revendications précédentes, dans lequel le capteur de reconnaissance d'image (11) est une caméra à dispositifs à couplage de charges.

4. Dispositif d'inspection selon l'une quelconque des revendications précédentes, dans lequel la troisième source de lumière (15) est une lumière circulaire.

5. Dispositif d'inspection selon l'une quelconque des revendications précédentes, dans lequel tout à la fois le capteur de reconnaissance d'image (11) et le dispositif de réception d'image (14, 16) comprennent chacun une caméra, et dans lequel le système de traitement d'image (12) comprend un ordinateur, les caméras étant connectées à l'ordinateur de façon à permettre une mémorisation des images des emballages (2) dans l'ordinateur, afin de permettre à une analyse d'image automatique supportée par un logiciel d'être effectuée.
